# EUROPEAN PATENT APPLICATION

(11) **EP 4 706 985 A1**
(43) Date of publication of application: **11.03.2026**
(21) Application number: 25195544.9
(22) Date of filing: 12.08.2025
(51) Int. Cl.: B60C 7/02, B60C 7/06, B60C 7/14, B60C 7/24

(54) **DEFORMABLE WHEEL WITH SIMPLIFIED DESIGN FOR LUNAR AND MARTIAN CONDITIONS**

(30) Priority: 06.09.2024 US 202418826273
(71) Applicant: Venturi Lab SA, 1720 Corminboeuf (CH)
(72) Inventor: BAUMGARTNER, Gérard, 1720 CORMINBOEUF (CH); DELFINO, Antonio, 1720 CORMINBOEUF (CH); OLSOMMER, David, 1720 CORMINBOEUF (CH); SCHROETER, Pascal, 1720 CORMINBOEUF (CH)
(74) Representative: Cabinet Beau de Loménie

(57) **Abstract**

The invention relates to a deformable wheel (2) with non-pneumatic load bearing intended to equip a vehicle for rolling under extreme conditions such as those encountered on the Moon and on Mars, comprising a hub (4), a annular tread (6) intended to be in contact with the soil, positioned around the hub which is concentric therewith and comprising a layer of composite material coated with at least one protective layer, and a plurality of metal cables (8) whose outer diameter is comprised between 0.2 mm and 5 mm, each cable connecting the hub (4) to the tread while being fixed, on the one hand by an external end (8a) to the tread, and on the other hand by an internal end (8b) to the hub by means of an elastic member (18) making it possible to modulate the radial stiffness of the cables, each elastic member being associated with an abutment (12, 14) able to limit its deformation.

## Description

### Background

The present application relates to a deformable wheel with non-pneumatic load bearing. More particularly, the application relates to a wheel which bears a load with its structural components and which has performance capacities suitable for equipping a vehicle intended to roll under extreme conditions such as those encountered on the Moon and on Mars.

The pneumatic wheel has load bearing, road shock absorption and force transmission (accelerations, stops and changes of direction) capabilities that are particularly well suitable for many vehicles in particular bicycles, motorcycles, cars and trucks. The shock absorption capabilities of tires are also useful in other applications, for example for trolleys transporting medical equipment or sensitive electronic equipment.

Alternatives to the pneumatic wheel exist. Mention may be made, for example, of solid tires and spring-loaded tires. However, these alternatives do not have the performance advantages of the pneumatic wheels. Particularly, the solid tires rely on the compression of the part in contact with the soil to bear the load. This type of tires can be heavy and rigid and does not have the capacity to absorb the shocks of the pneumatic wheels. When made more elastic, the conventional non-pneumatic wheels do not have the load bearing or the endurance of the pneumatic wheels.

To overcome these drawbacks, the US Patent Number 7,418,988 proposes a tire with structural bearing which comprises an external annular strip and a plurality of spokes extending transversely and radially inwards from the annular strip to the hub of the wheel and intended to transmit in tension the load forces between the annular strip and the hub.

The wheel with structural bearing according to this invention does not include a cavity intended to contain pressurized air and therefore does not need to have a seal with the rim of the wheel to maintain the internal air pressure. This wheel with structural bearing therefore does not require a tire in the usual sense.

The spokes of this wheel act in tension to transmit the load forces between the wheel and the annular strip, which makes it possible in particular to bear the mass of a vehicle. The bearing forces are generated by the tension of the spokes which are not connected to the part of the annular strip in contact with the soil. The spokes also transmit the forces required for the acceleration, the stops and the turns.

Whatever the alternatives known from the prior art for the production of non-pneumatic wheels, these generally do not give complete satisfaction, in particular when they are intended to roll under extreme conditions such as those encountered on the Moon and on Mars. Indeed, with such conditions, it is necessary for the wheel to be able to deform strongly when passing an obstacle while generating a contact pressure which is low and uniform to allow the vehicle to remain movable on loose soil such as soil found on the Moon and on Mars.

To meet these requirements, EP 4,331,867 discloses a deformable wheel with non-pneumatic load bearing having a laminated annular strip which comprises a plurality of concentric ferrules which are assembled with interposition of interposing layers each composed of a material whose Young's modulus is 600,000 to 1,000 times lower than that of the ferrules. Under an externally applied load, the part of the laminated strip in contact with the soil deforms, not in an essentially circular shape, but in a shape conforming to the surface of the soil while maintaining an essentially constant length of the ferrules. The relative displacement of the ferrules of the laminated strip occurs by shearing in the interposing layers. The wheel according to this invention thus makes it possible to generate a contact pressure which is low and uniform on the soil. In this way, the vehicle equipped with such wheels can remain movable even on loose soil as found on the Moon and on Mars.

The wheel disclosed in EP 4,331,867 is therefore perfectly suited to the constraints encountered on the Moon and on Mars. However, its weight and manufacturing cost can be considered relatively high.

### Summary

The main aim of the present application is therefore to overcome such drawbacks by proposing a deformable wheel structure with non-pneumatic load bearing and with a simplified design.

In accordance with the application, this aim is achieved thanks to a deformable wheel with non-pneumatic load bearing intended to equip a vehicle for rolling under extreme conditions such as those encountered on the Moon and on Mars, comprising:
- a hub,
- an annular tread intended to be in contact with the soil, positioned around the hub which is concentric therewith and comprising a layer of composite material coated with at least one protective layer, and
- a plurality of metal cables whose outer diameter is comprised between 0.2 mm and 5 mm, each cable radially connecting the hub to the tread while being fixed, on the one hand by an external end to the tread, and on the other hand by an internal end to the hub by means of an elastic member making it possible to modulate the radial stiffness of the cables, each elastic member being associated with an abutment able to limit its deformation.

The wheel according to the application is remarkable in particular due to the presence of a tread (instead of a laminated annular strip) made of a composite material with high elastic elongation, even at temperatures close to absolute zero. The wheel according to the application is able to remain flexible even at temperatures close to absolute zero for exploring areas of the Moon or Mars such as those encountered in permanently shadowed regions, without the need for temperature maintenance.

It is the bending of the tread, combined with the elasticity of the cables that enables the wheel to achieve a lift compatible with certain lunar applications. In order to guarantee the robustness and an acceptable lifespan of the wheel according to the application, this tread must be effectively protected against obstacles, in particular the particularly sharp stones encountered on the Moon, by the protective layer.

Moreover, the wheel according to the application is of simplified design, which reduces its manufacturing cost, while maintaining its operating qualities at very low temperatures and pressures.

The protective layer of the tread may comprise at least one layer of textile material. A particularly advantageous type of textile is needle felt, which may or may not be resin-reinforced. These textiles are available in thicknesses ranging from approx. 2 to 20mm. The deformation of the tread on flat ground, and even more so when passing over obstacles, requires the textile to be able to stretch and contract by around 10% for a distance to the tread of around 5mm. The greater the distance to the tread, the greater the elongation required.

Advantageously, the protective layer of the tread may comprise at least two layers of textile material bonded together by gluing of stitching.

Alternatively, the protective layer of the tread may comprise a metallic outer ring, e.g. spring steel or titanium alloy, and an interposing layer of low shear rigidity (but having a sufficient compressive and tensile rigidity to maintain a stable distance between the inner load-bearing shell and the outer protective layer) sandwiched between the layer of composite material and the outer ring.

According to another alternative, the protective layer of the tread may comprise a metallic inner ring and an interposing layer of low shear rigidity sandwiched between the layer of composite material and the inner ring. This metallic inner ring protects the tread from abrasive stones and radiation.

In that case, the protective layer of the tread may further comprise at least one layer of textile material arranged around the outer ring. The cables may be connected by their respective external ends to the outer ring of the protective layer of the tread.

Alternatively still, the protective layer of the tread may comprise at least one additional layer of glass fiber/resin composite material and an interposing layer sandwiched between the layer of composite material and the additional layer of composite material.

In this case, the load-bearing capacity of the wheel can be increased to support heavier vehicles, while at the same time maintaining sufficiently low tread thicknesses - an essential condition for permitting large deformations without plasticizing or breaking the load-bearing treads

Advantageously, the hub carries at least one radially outward-projecting disk against which an inner surface of the tread can abut in the event of a major obstacle, in order to limit tread deformation.

The layer of composite material of the tread may be made from glass fiber and resin.

Alternatively, the layer of composite material of the tread may be made from carbon or basalt fibers and resin.

### Brief description of the drawings

Other characteristics and advantages of the present application will become apparent from the description given below, with reference to the appended drawings which illustrate one exemplary embodiment devoid of any limitation. On the figures:
- Figure 1 is a schematic perspective view of a wheel according to a first embodiment of the application without the protective layer;
- Figure 2 is a schematic front view of the wheel of Figure 1 in elevation;
- Figure 3 is a schematic front view of a wheel according to the first embodiment of the application (with the protective layer);
- Figure 4 is a schematic front view of a wheel according to a second embodiment of the application; and
- Figure 5 is a schematic front view of a wheel according to a third embodiment of the application.

### Detailed description of embodiments

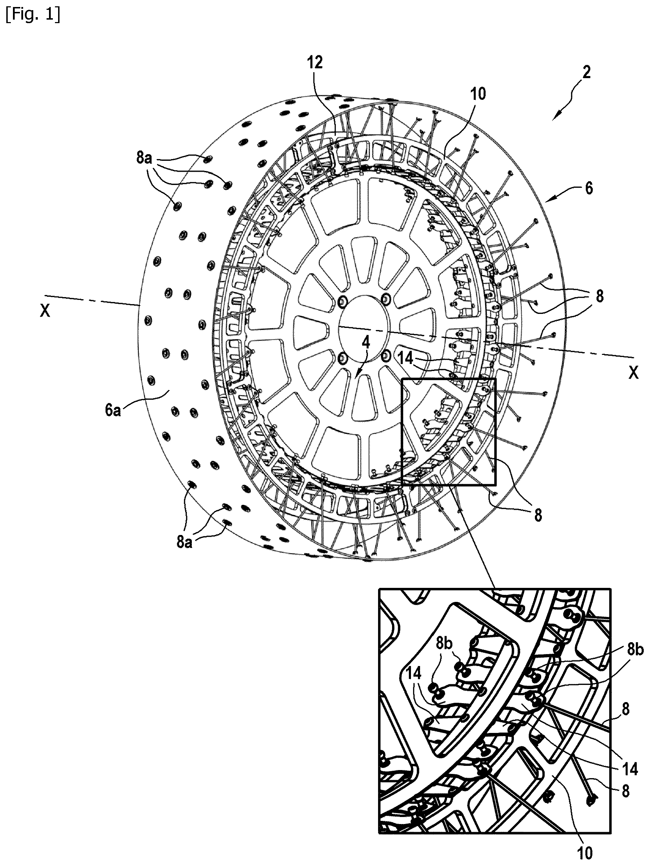

The application relates to a deformable wheel with non-pneumatic load bearing as represented in Figure 1 which is adapted to equip a vehicle intended to roll under extreme conditions such as those encountered on the Moon and on Mars.

The wheel 2 represented in Figure 1 mainly comprises a hub 4, an annular tread 6 intended to be in contact with the soil, and a plurality of metal cables 8 radially connecting the hub to the tread.

The tread 6 comprises a layer of composite material coated with at least one protective layer and will be described in details later.

As represented in particular in Figure 1, the hub 4 of the wheel carries two disks 10, 12 which protrude radially outwards. These two disks are spaced from each other along the axis X-X of the wheel and each have an outer diameter against which the internal surface of the tread 6 is able to come into abutment in order to limit its deformations.

The cables 8 radially connect the tread 6 to the hub 4. For this purpose, each cable 8 comprises an external end 8a which is fixed on the internal surface of the tread.

At their respective internal end, the cables 8 are fixed on the hub 4 by means of an elastic member 14 making it possible to modulate the radial stiffness of the cables. Here again, the internal ends 8b of the cables pass through the hub in its thickness.

As disclosed in EP 4,331,867 (the content of which is incorporated by way of reference), each cable 8 is composed of an assembly of metal wires (for example made of steel) made up of strands, themselves brought together around a metal core. For example, each cable includes 6 or 7 strands each composed of 7 to 61 metal wires, the assembly having an outer diameter comprised between 0.2 mm and 5 mm.

In addition, each cable 8 has a ratio between its tensile mechanical stiffness Kt and its compressive mechanical stiffness Kc which is comprised between 50,000 and 300,000 (i.e. 5,000 ≤ Kt/Kc ≤ 300,000), and preferably comprised between 25,000 and 150,000 (i.e. 25,000 ≤ Kt/Kc ≤ 150,000).

These mechanical stiffness values Kt and Kc were obtained by following the recommendations of the ISO 2408:2017 and ISO 17893:2004 standards (relating to the requirements of steel cables) and by using an "INSTRON^{®}" brand testing machine, model 34TM-10.

In other words, the cables 8 have a stiffness asymmetry with a tensile mechanical stiffness Kt greatly greater than their compressive mechanical stiffness Kc.

Moreover, the cables 8 have a particular distribution all around the axis X-X of the wheel with a first double row of n cables whose respective internal ends are positioned on the inner side of the wheel, and a second double row of m cables whose respective internal ends are positioned on the outer side of the wheel.

More specifically, for each double row of cables, the internal ends are mounted on the hub by being positioned laterally between one of the two disks 10, 12 and the (inner and outer) side edge of the hub. The number n, m of cables can be the same for each double row of cables.

More details related to the cables are given in EP 4,331,867 (the content of which is incorporated by way of reference).

In the embodiments of Figures 1 to 4, the elastic members by means of which the respective internal end 8b of the cables 8 is fixed on the hub 4 are leaf springs 14. These leaf springs 14 make it possible to modulate the radial stiffness of the cables.

More specifically, each leaf spring 14 has the shape of an elongated plate which extends longitudinally along the axis X-X of the wheel. In addition, each leaf spring 14 comprises two opposite longitudinal ends which are each connected to the internal end 8b of a cable 8.

It will be noted that the internal surface of the hub 4 forms an abutment able to limit the outward deformation of the spring-loaded leaves 14.

When the surface of the soil presents a major obstacle (for example a rock), the part of the tread 6 which is in contact with the soil continues to deform to match the profile of the obstacle. In such a situation, depending on the size of the obstacle, the internal surface of the tread 6 can come into abutment against the external diameter of the disks 10, 12 carried by the hub 4 in order to limit the deformations undergone by the laminated strip.

According to the present application, the tread 6 comprises a layer of composite material 6a coated with at least one protective layer 6b.

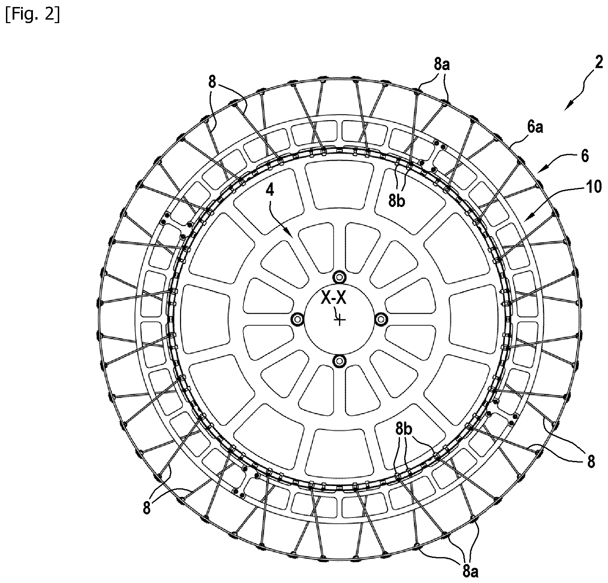

In the embodiment of Figures 1 and 2, the layer 6a of composite material of the tread 6 is made from glass fiber and resin. Alternatively, the layer of composite material of the tread could be made from carbon or basalt fibers and resin.

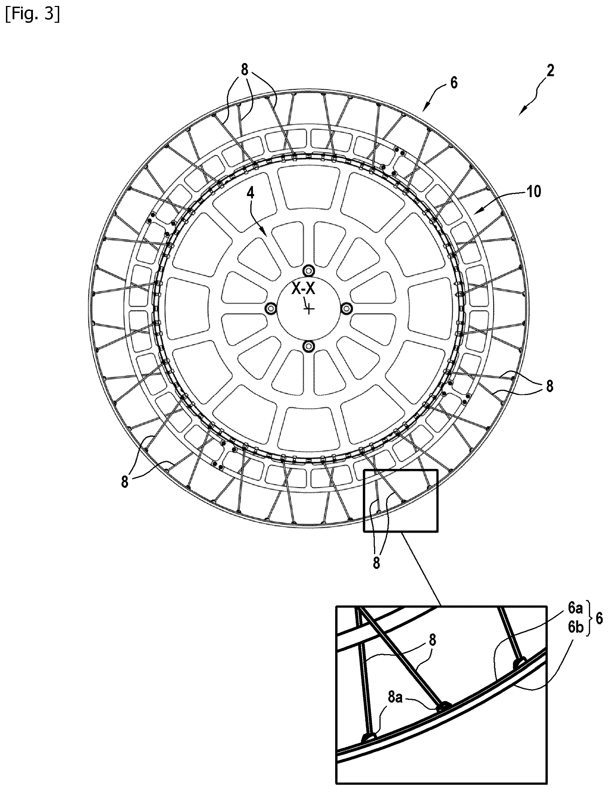

As illustrated by Figure 3, the protective layer 6b of the tread 6 may comprise one layer of textile material.

In that case, a particularly advantageous type of textile is needle felt, which may or may not be resin-reinforced. These textiles are available in thicknesses ranging from approx. 2 to 20mm. The deformation of the tread on flat ground, and even more so when passing over obstacles, requires the textile to be able to stretch and contract by around 10% for a distance to the tread of around 5mm. The greater the distance to the tread, the greater the elongation required.

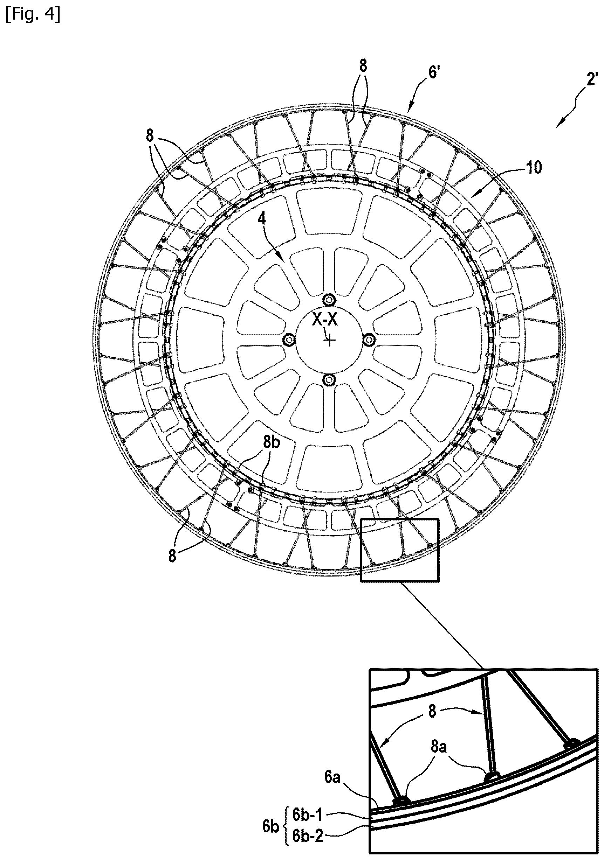

In the embodiment of the wheel 2' illustrated by Figure 4, the protective layer 6b of the tread 6' comprises two (or more) layers of textile 6b-1, 6b-2 identical to those described in connection with Figure 3.

In that embodiment, the layers of textile 6b-1, 6b-2 are bonded together by gluing of stitching. When the layers of textile are bonded by gluing, it is advantageous to use spot gluing instead of continuous gluing. Indeed, dot gluing allows the textile to stretch sufficiently between two (rigid) glue dots, without breaking the bond. One particular arrangement may consist of glue dots approximately 4mm in diameter, spaced 15mm apart.

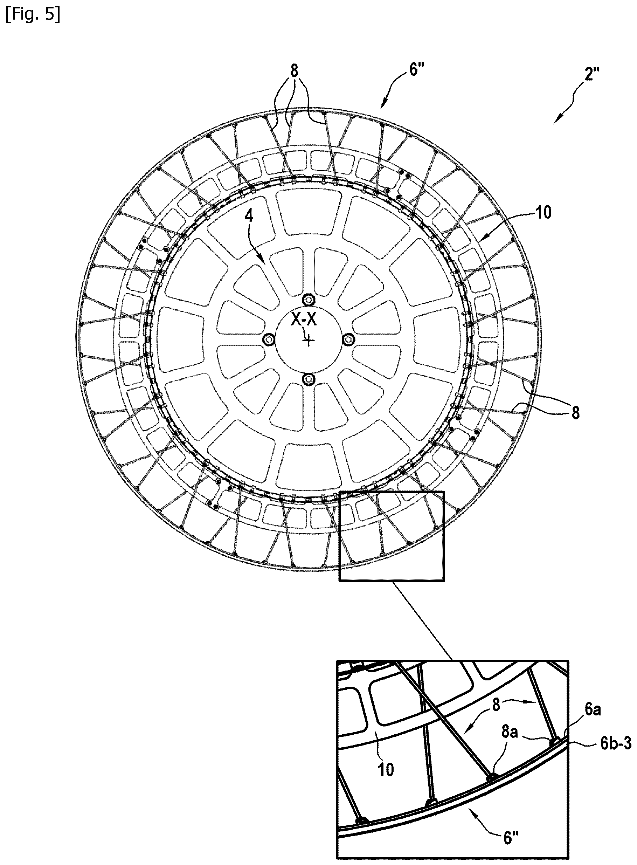

In the embodiment of the wheel 2" illustrated by Figure 5, the protective layer of the tread 6' comprises a metallic outer ring 6b-3 and an interposing layer (not shown) of low shear rigidity sandwiched between the layer 6a of composite material and the outer ring 6b-3.

The outer ring 6b-3 may be made of spring steel or titanium alloy, and the interposing layer has low shear rigidity but a sufficient compressive and tensile rigidity to maintain a stable distance between the inner load-bearing shell and the outer protective layer.

In that embodiment, the protective layer of the tread may further comprise at least one layer of textile material (not shown) arranged around the outer ring 6b-3. The cables 8 may be connected by their respective external ends 8a to the outer ring 6b-3 of the protective layer of the tread.

In a non-illustrated embodiment of the application, the protective layer of the tread of the wheel comprises at least one additional layer of glass fiber/resin composite material and an interposing layer sandwiched between the layer of composite material and the additional layer of composite material.

The purpose of this additional layer is to increase the wheel's load-bearing capacity, while avoiding increasing the thickness of the composite layer too much (because if it's too thick, it loses the flexibility needed to adapt to the unevenness of the ground and risks breaking).

## Claims

1. A deformable wheel with non-pneumatic load bearing intended to equip a vehicle for rolling under extreme conditions such as those encountered on the Moon and on Mars, comprising:
a hub,
an annular tread intended to be in contact with the soil, positioned around the hub which is concentric therewith and comprising a layer of composite material coated with at least one protective layer, and
a plurality of metal cables whose outer diameter is comprised between 0.2 mm and 5 mm, each cable radially connecting the hub to the tread while being fixed, on the one hand by an external end to the tread, and on the other hand by an internal end to the hub by means of an elastic member making it possible to modulate the radial stiffness of the cables, each elastic member being associated with an abutment able to limit its deformation.

2. The wheel according to claim 1, wherein the protective layer of the tread comprises at least one layer of textile material.

3. The wheel according to claim 2, the protective layer of the tread comprises at least two layers of textile material bonded together by gluing of stitching.

4. The wheel according to claim 1, wherein the protective layer of the tread comprises a metallic outer ring and an interposing layer of low shear rigidity sandwiched between the layer of composite material and the outer ring.

5. The wheel according to claim 4, wherein the protective layer of the tread further comprises at least one layer of textile material arranged around the outer ring.

6. The wheel according to claim 4, wherein the cables are connected by their respective external ends to the outer ring of the protective layer of the tread.

7. The wheel according to claim 1, wherein the protective layer of the tread comprises at least one additional layer of glass fiber/resin composite material and an interposing layer sandwiched between the layer of composite material and the additional layer of composite material.

8. The wheel according to claim 1, wherein the hub carries at least one radially outward-projecting disk against which an inner surface of the tread can abut in the event of a major obstacle, in order to limit tread deformation.

9. The wheel according to claim 1, wherein the layer of composite material of the tread is made from glass fiber and resin.

10. The wheel according to claim 1, wherein the layer of composite material of the tread is made from carbon or basalt fibers and resin.

11. The wheel according to any claim 1, wherein the protective layer of the tread comprises a metallic inner ring and an interposing layer of low shear rigidity sandwiched between the layer of composite material and the inner ring.

12. A deformable wheel with non-pneumatic load bearing intended to equip a vehicle for rolling under extreme conditions such as those encountered on the Moon and on Mars, comprising:
a hub,
an annular tread intended to be in contact with the soil, positioned around the hub which is concentric therewith and comprising a layer of composite material coated with at least one protective layer, and
a plurality of metal cables whose outer diameter is comprised between 0.2 mm and 5 mm, each cable radially connecting the hub to the tread while being fixed, on the one hand by an external end to the tread, and on the other hand by an internal end to the hub by an elastic member making it possible to modulate the radial stiffness of the cables, each elastic member being associated with an abutment able to limit its deformation.

13. The wheel according to claim 12, wherein the protective layer of the tread comprises at least one layer of textile material.

14. The wheel according to claim 13, the protective layer of the tread comprises at least two layers of textile material bonded together by gluing of stitching.

15. The wheel according to claim 12, wherein the protective layer of the tread comprises a metallic outer ring and an interposing layer of low shear rigidity sandwiched between the layer of composite material and the outer ring.

16. The wheel according to claim 15, wherein the protective layer of the tread further comprises at least one layer of textile material arranged around the outer ring.

17. The wheel according to claim 15, wherein the cables are connected by their respective external ends to the outer ring of the protective layer of the tread.

18. The wheel according to claim 12, wherein the protective layer of the tread comprises at least one additional layer of glass fiber/resin composite material and an interposing layer sandwiched between the layer of composite material and the additional layer of composite material.

19. The wheel according to claim 12, wherein the hub carries at least one radially outward-projecting disk against which an inner surface of the tread can abut in the event of a major obstacle, in order to limit tread deformation.

20. The wheel according to claim 12, wherein the layer of composite material of the tread is made from glass fiber and resin.
